# EUROPEAN PATENT APPLICATION

(11) **EP 3 533 319 A1**
(43) Date of publication of application: **04.09.2019**
(21) Application number: 19382147.7
(22) Date of filing: 28.02.2019
(51) Int. Cl.: A01G 9/02, A01G 27/00, A01G 31/02

(54) **VERTICLE GROW BOX MODULE AND MODULE AND SYSTEM OF VERTICAL GROW BOXES THAT INCORPORATES IT**

(30) Priority: 01.03.2018 ES 201830199
(71) Applicant: Optimus Garden SL, 28100 Alcobendas (ES)
(72) Inventor: Krack, Damien Christian Pierre, 28100 Alcobendas (ES); Cabrera Méndez, Manuel José, 28100 Alcobendas (ES)
(74) Representative: Zuazo Araluze, Alexander

(57) **Abstract**

Grow box Module (12) of vertical gardening that comprises a grow box body (32), a protruding pipe (14) inclined toward the front from the edge of the grow box module (12) and a drilled partitioning surface (17) with a plurality of drain holes (16) that creates an upper and lower water chamber in the grow box body (32), upper chamber being arranged at the bottom opening of the protruding pipe (14), so it keeps the irrigation water in the upper chamber but it allows at the same time to drain to the lower chamber. The grow box Module (12) is characterised by that the drilled partitioning surface (17) inclined (β) with regard to the horizontal.

## Description

### Object of the invention

The object of the present invention is a hydroponic modular planting system that can be applied on every vertical surfaces, as for example facades of buildings to generate green walls or vertical gardens, as well as a growing unit and system of vertical gardening that incorporates one or more than said modules.

### Antecedents of the invention

The Eco-friendly building design is becoming every year more popular and one of the main characteristic of an Eco-friendly home is it's energy efficiency. Eco-friendly homes reduce the amount of energy needed to air-conditioning and lighting.

To reduce the energy needed in air conditioning, insulation using energy-efficient materials is installed. Such thermal highly insulation material is based on air-trapping property, using double exterior wall with air chamber or air chamber filled with insulation material. Green wall can be used on vertical surface or rooftop to protect buildings from high temperature variation, improving the aesthetic and providing others unknown benefits. So, for example, rooftop can be used as suitable place by hospitality industry to create trendy place in big cities.

In addition to these Eco-friendly good practices, urban citizens desire to be surrounded by nature and making use of the existing walls to produce fresh food in limited spaces. Such urban agriculture, can contribute to sustainable and resilient food system for cities.

They are 2 kinds of vertical gardens. The first type of green wall uses a solid growing medium, usually earth, when the second type uses a soil-less growing culture also called hydroponic culture. In hydroponics, plant's roots are fed directly with an aqueous solution that incorporates dissolved nutrients.

When a traditional growing medium is used, there are a lot of vertical gardening technologies available on the market and, among them, we found modular stacking green wall system, that combines together each module to create a large vertical garden.

When it opts by the hydroponics crops there is crowd of documents of patent that spread modular systems for vertical gardens, among which can quote the following:
- WO2017185116: That describes a planting container for vertical hydroponic planting cultivation.
- US2016/135393: That describes a bag-shaped vertical-hanging unit for plant hydroponics crops and a vertical panel for these bag-shaped vertical-hanging units
- KR/20140066851: That describes a system of hydroponic vertical planting system using a series of rocky surface.
- US2013/118074: That describes a hydroponic modular planting system that includes individual growing modules. These individual growing modules can be stacked vertically and/or laterally to form a modular planting system.

Like a third option, let's mention the aeroponic cultivating systems. In aeroponic technology, the roots are suspended in air and the plants get their nutrients from a water-based solution delivered to the roots by a fine mist or spray. Compared to hydroponic system, plants grow faster and absorb more nutrients because roots received more oxygen. Aeroponic systems have been also patented as vertical gardening system. As example of such aeroponic system, Patent ES1069610 can be mentioned, and it describes a container with innovative system for hanging this cultivating system to walls.

Patent publication WO 2015/133871 A1 discloses a modular planting system in accordance with the preamble of claim 1.

The present invention relates to a tray that can be of reduced size. A plurality of these trays connected to each other in the vertical direction will form columns of the size wished. Besides, it allows to combine hydroponics and aeroponics, joining the advantages of both technologies.

### Description of the invention

The present invention relates to a Vertical Grow Box module that comprises a small lengthened box with an empty inner space body (grow box body) and an inclined protruding pipe inserted toward the front from the edge of the grow box that comprises a partition. This said surface is drilled in such shape that it creates a water chamber in the inner space of the of the grow box body. These drilled holes of the partitioning surface allow water to drip or drain from upper space to lower space of the water chamber.

In the operation of the vertical grow box module, the plant is inserted into the protruding pipe to be irrigated by water dripping from upper space to lower space of the water chamber. The plant is inserted by means of a pot, for example, a mesh pot.

Preferably, to allow irrigation water to drain easily through this water chamber partition, said surface presents a plurality of drain holes which intern level with such surface

Also preferably, that drip surface is inclined with regard to the horizontal, that's mean an inclined surface with regard to a horizontal plan perpendicular to the vertical direction, in the operation of the module of vertical gardening.

In this way it makes possible, in particular, to reduce the size of the vertical grow box module with regard to other modules known in the state of the art, in which the water chamber partition is horizontal. Such partition surface is space consuming for the grow box module, so suppression of inclined surface that is not equipped by drain holes is beneficial.

On the other hand, such drilled & inclined surface makes possible a controlled water distribution for the plant, avoiding that the roots of the plant get rot, if they receive too much water (substratum drenched), or get dry in contrary case.

Advantageously, said drilled surface is inclined in the opposite direction to the inclination of the protruding pipe, more preferably with an inclination of 8°.

Also in a particularly preferred embodiment, said drilled surface presents a plurality of holes that, preferably, are distributed in a triangular shape, with the drain holes that form the base of this triangle oriented to the protruding pipe. Even more preferably, the drain holes are at least nine, having a diameter of 4 mm, and can be shaped like cylindrical nozzles.

Also preferably, the water chamber partition presents a slit that allows water to drain to lower space. This drainage slit is located at the junction with inner side wall of the grow box body, at the bottom opening level of the protruding pipe.

In this way, said drilled & inclined surface in opposite direction to the inclination of the protruding pipe and/or said distribution in a triangular shape of drain holes and/or said drainage slit located at the junction with inner side wall of the grow box, especially, improve the watering of the plant in the upper part of its substrate, by concentrating water in such part of the plant.

In a preferred embodiment of the invention, the drain partitioning surface presents at least one overflow that allows the drainage of excess of water. The overflow's level is defined by the height between the bottom of the drain partitioning surface and the top of the overflow, in such a way that overflow starts draining excess of water once water level surpasses said height.

More preferably, at least one said overflow presents an inclination in its lower part, that means, at the draining overflow exit in the lower space of the water chamber. So in case of stacking several grow box modules, the excess water would drain substantially more on the top of the drilled partitioning surface of the inferior water chamber than on its overflow. Even more preferably, such drain partitioning surface presents two overflows facing each other, respectively arranged on this surface, at the left and right side of the protruding pipe.

The grow box body presents preferably a rectangular transversal section with rounded corners.

Also preferably, said grow box body presents a first edge rabbet on the inner perimeter of its upper border and a second edge rabbet on the outer perimeter of its down border, both edge rabbets fitting one with another to allow upper grow box module to fit with down module.

In a preferred embodiment of the invention, the grow box module presents grooves in its top border, that allow the support of at least one watering pipe. More preferably, these said grooves allow the push fit of at least one irrigation pipe, additionally or alternatively push fit fixation can be secured to the grooves by means of at least one flange.

Also preferably, the grow box module of the invention presents a coupling guide in its rear surface, which allows its coupling with any other surface equipped by a rail coupling, including to the main deposit of a hydroponic modular planting system.

In a preferred embodiment of the invention, the grow box module has a total height of 175 mm and a width of 40 mm, the protruding pipe has a diameter of 51,09 mm and an inclination of 43°, and the drilled partitioning surface has an inclination of 8°.

Also in a preferred embodiment of the invention, the grow box module has several triangular fins in the inner circular surface of the protruding pipe in such a way that the free inner section of the protruding pipe reduces to the interior of the module.

In a preferred embodiment, the grow box module, the protruding pipe and the drilled partitioning surface form only one integral piece, made of opaque plastic, such as Acrylonitrile Butadiene Stirene.

In a second preferred embodiment of the invention, a modular planting unit that comprises two or more grow box modules according to the anterior preferred embodiment. In a preferred embodiment, said grow box modules in its operation can be stacked one module on top of other by means of its edge rabbets of its upper and down border.

In a third preferred embodiment of the invention, a hydroponic modular planting system that comprises:
(i) a main water tank, aimed to be fixed to an independent vertical support, that comprises at least a filling nozzle and at least a drainage valve;
(ii) at least a grow box module, fixed to the main water tank;
(iii) a secondary water tank under the main one, and that collect the draining water from the main water tank through the said drainage valve and at least through a module grow box module; and
(iv) an irrigation system that comprises at least a water pump that pumps water from the secondary tank and by means of at least a pipe up to at least one water nozzle to drip water in the upper opening of each grow box module.

The secondary water tank can be fixed to an independent vertical support, to the main tank or both.

Preferably, the at least one filling nozzle of the main water tank can close by means of a corresponding cap.

Also preferably, the hydroponic modular planting system presents one or more rail (like DIN rail, preferably of 35 mm of width and 7,5 mm of height) that allow to couple each grow box module to the main water tank by means of its coupling guides.

Preferably, the hydroponic modular planting system presents also a metallic frame support that incorporates a plurality of openings for the fixation of the grow box modules.

Also in a preferred embodiment of the invention, the hydroponic modular planting system presents a casing that covers one or more grow box modules, the main and secondary water tanks. This casing presents openings facing to the protruding pipes of grow box modules.

Preferably the main and secondary water tanks are made of opaque plastic, such as Acrylonitrile Butadiene Stirene. More preferably, also the casing is made of the same material.

Also preferably, hydroponic modular planting system is equipped with a control device that comprises a plurality of sensors to measure at least the ambient humidity and temperature and the water level sensor of the main water tank, communication controller y microprocessor to collect, process and store the data from the mentioned sensors and exchange these data with at least an independent smart communication device. An Informatics Application can be installed in at least one smart communication device. Such Informatics Application can control remotely at least the water pump. More preferably, the sensors measure also the light intensity and at least an independent controller controls a system of artificial light.

### Brief description of the drawings

The present invention will understand better with reference to the following drawings that are intended to illustrate preferred embodiment of the invention. These illustrations show examples, and shall not be interpreted as restricting in any way.

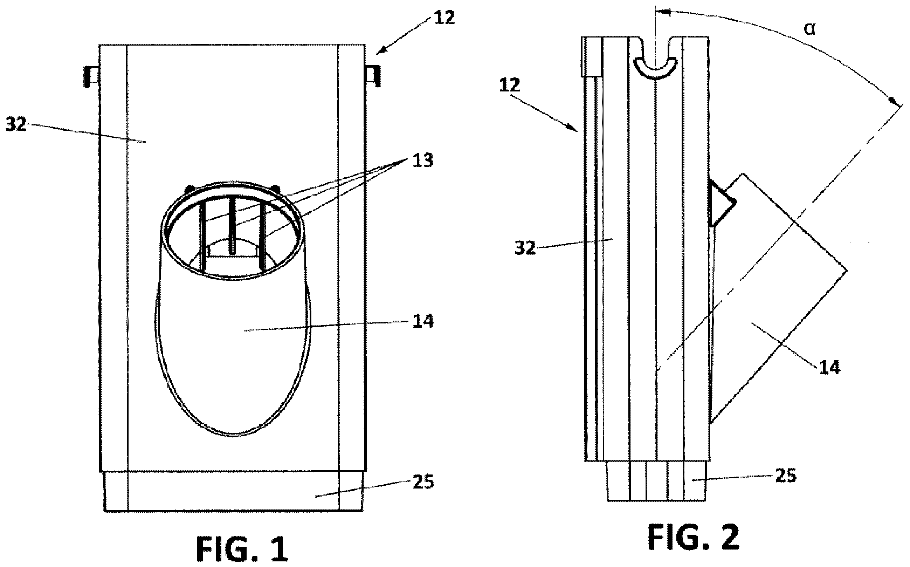

Figure 1: it shows a front view of of the vertical grow box module in a preferred embodiment of the invention.
Figure 2: it shows a side view of the vertical grow box module in figure 1

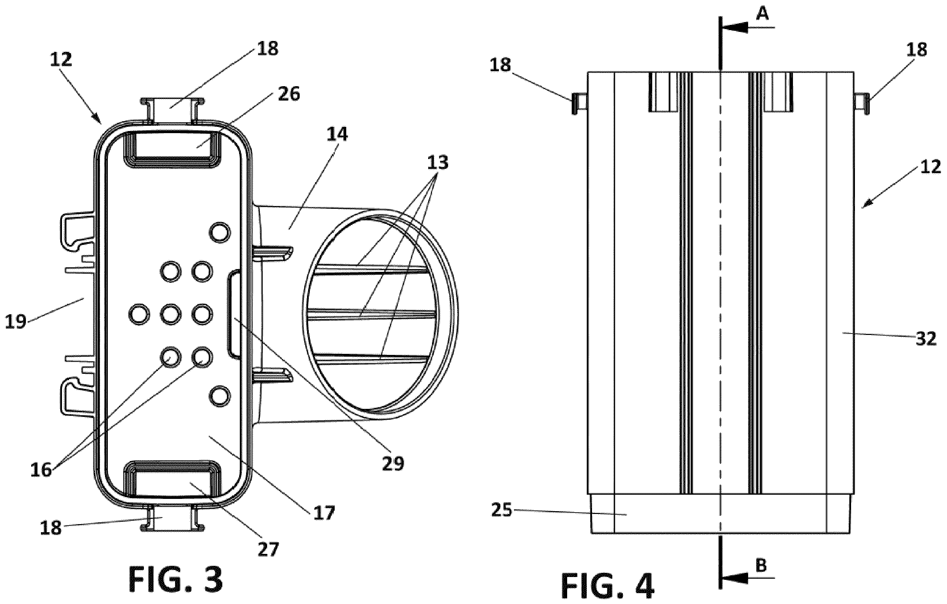

Figure 3: It shows a top view of the vertical grow box module in figures 1 and 2.
Figure 4: It shows a back view of the vertical grow box module in figures 1 to 3.

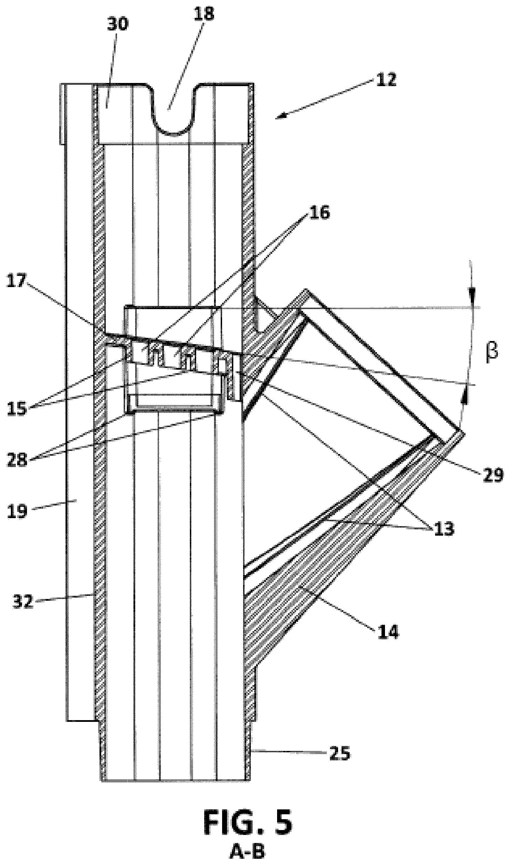

Figure 5: It shows a cross-section view of the the vertical grow box module along line A-B in figure 4.
Figure 6: it shows an exploded view of hydroponic modular planting system according to the present invention, that incorporates several grow box modules depicted in figures 1 to 5.

### Preferred embodiment

Preliminarily, it must be emphasized that in this memory the "vertical grow box module" is used not only for growing ornamental plants, but also for growing edible plants for human and/or animal diet. In other words when we make reference of vertical growing system it could be used for "green wall" (decorative plants) or for "vertical gardening" (edible plants).

The drawings 1 to 5 show the grow box module ***12*** of vertical gardening and the drawing 6 shows in turn one unit ***1*** of vertical gardening composed by three columns that in turn show, each one, three grow box modules ***12*** of vertical gardening; unit **1** that forms part of hydroponic modular planting system show in said drawing 6.

The characteristics of the grow box module ***12*** of vertical gardening, are composed from a small lengthened box module ***32*** (that presents preferably a rectangular transversal section with rounded corners) and a protruding pipe ***14*,** with the following:
- The inclination α of the protruding pipe ***14*,** preferably 43° with regard to the vertical.
- The triangular fins ***13*** installed in the inner circular surface of the protruding pipe ***14*,** that serve to keep in place the mesh pot (no represented) in which the plant is placed. The fins fix the mesh pot so it can't be released, and same for the plant.
- The partitioning surface ***17*** is inclined with regard to the horizontal (preferably with an inclination β of 8°), that makes possible a controlled water distribution for the plant, avoiding that the roots of the plant get rot; and, besides, in the case of two stacked modules ***12*,** it avoids that roots of two or more plants intertwined, and anyway it allows to distribute the nutritious solution in an uniform way along all the section of the module ***12*** of vertical gardening, whatever the number of modules ***12*** that are stacked one on top of the other, so that the plants always receive the same quantity of nutrient solution and in the same way.
- The drain holes ***16*** that deliver the mentioned nutrient solution to the entire roots system of the plant. Said drain holes ***16*,** have preferably a diameter of 4 mm and are shaped like cylindrical nozzles ***15*.** In a particularly preferred embodiment the drain holes are at least nine, and are distributed in a triangular shape, with the drain holes that form the base of this triangle oriented to the protruding pipe ***14*.** This allows a good oxygenation of the water as well as a good and uniform distribution of the nutrient solution to the roots area of the inserted plant in each mesh pot, independently of the number of modules ***12*** that are stacked one on top of the other.
- The two side overflows ***26*, *27*** are foreseen also in the surface ***17*,** and will allow to drain if roots are clogging the drain holes ***16*,** so water can still be distributed to the lower level by draining through the said side overflows ***26*, *27*.** Preferably said side overflows ***26*, *27*** are rectangular and present an inclination in their lower part ***28*** so that said overflowed water, in case of stacking several grow box modules ***12*,** will drain more on the top of the drilled partitioning surface ***17*** of the inferior water chamber than on the inferior side overflows ***26*, *27*,** so that will allow a correct irrigation of the plant.
- A drainage slit ***29*** in the drilled partitioning surface ***17*,** is located at the junction with inner side wall of the grow box body ***32*,** at the bottom opening level of the protruding pipe ***14*.** In a preferred embodiment that said drainage slit ***29*** is found in that location, so its concentrate mostly the draining water close to the lower part of the mesh pot and in the area where roots system is developing, allowing to concentrate in this area most of the nutrient solution.

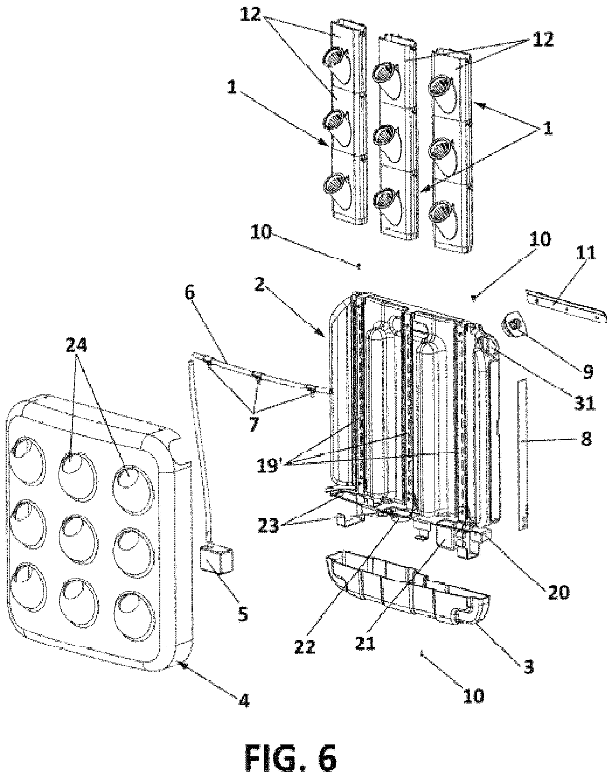

Besides, the grow box module ***12*** of vertical gardening presents grooves ***18*,** that allow allow the support of a watering pipe ***6*** for irrigation (as it shows specifically in figure 6). These grooves ***18*** allow the fixation of a watering pipe ***6*** for irrigation or by push fit fixation or by means of flanges (or even by both ways).

The drilled partitioning surface ***17*** will be part integrally of the grow box module ***12*** of vertical gardening, but it also could be installed like a separate piece, attaching it by any way of adapted fixation.

In a preferred embodiment of the invention, the grow box module ***12*** of vertical gardening has a height of 175 mm, a width of 40 mm and a longitude of 100 mm, and a protruding pipe ***14*** diameter of 51,09 mm.

Preferably, the grow box module ***12*** of vertical gardening presents a coupling guide ***19*** for the fixation to the main water tank ***2*** by means of rails ***19'*,** that can be DIN rails for coupling (of 35 mm of width and 7,5 mm of height in preferred embodiment). These coupling guide 19 allow in fact the coupling of the grow box module ***12*** of vertical gardening no only to the main water tank ***2*** equipped with rails ***19'*,** but to any surface that is equipped with equivalent rails.

The drawing 6 shows the hydroponic modular planting system, in which the main water tank ***2*** get on its top a filling nozzle ***31*** with its corresponding plug ***9*** and, in its inferior part, is equipped with one or more drainage valves ***22*,** it's assumed in the present memory that this water incorporates usually diverse nutrients that feed the plants (so that composes the nutrient solution). Said main water tank ***2*** is fixed to an independent vertical wall (no represented) by means of, for example, clamping plates ***11*** by means of suitable screws ***10,*** and serves of support to the rest of elements of the invention.

The main water tank ***2*,** combined with at least a drain valve ***22*** (preferably a floating valve) and the secondary water tank ***3*** are a very effective way to achieve a very thin hydroponic modular planting system.
drawing 6 shows in turn one unit ***1*** of vertical gardening composed by three columns that in turn show

The grow box module ***12*** of vertical gardening can be joined together to form units ***1*** of vertical gardening stacked on on the top of other (Drawing 6 shows a unit ***1*** of vertical gardening formed by three columns of three grow box module ***12*** each one). This assembly is made possible because, the edge rabbet on the outer perimeter of down border ***25*** of grow box module ***12*** fit perfectly with the edge rabbet on the inner perimeter of its upper border ***30.*** These units ***1*** are coupled to the main water tank surface ***2*** and have four essential functions, namely be used as water chamber where roots system can grow and plants protrude through protruding pipe ***14*** and act like support of the plants, drain the excess of irrigation water that drip from drain holes ***16*** and collected in the secondary tank ***3*,** to distribute uniformly the irrigation water at all levels of grow box module ***12*,** and oxygenate the plant roots system for its correct growth. Said secondary deposit ***3*** is placed under the main one ***2*** and can be hung up directly to an independent vertical surface or, as it is the case in a preferred embodiment of the invention, joined to the main water tank ***2*** by means of a metallic frame ***20*.** Said metallic frame get some openings ***23*** for fitting with grow box module ***12*** of vertical gardening by means of the edge rabbet on the outer perimeter of down border ***25*** of grow box module ***12*.**

The irrigation system, showed schematically, comprises a water pump ***5*** that pumps water from the secondary tank ***3*,** through pipe ***6*** up to water nozzle ***7*** for dripping water.

The main water tank ***2*** and secondary one ***3*,** the grow box modules ***12*** and the irrigation system are covered by a casing ***4*,** with openings ***24*** facing to the protruding pipes ***14*** of the grow box modules ***12*.** Said casing ***4*** is a "push fit" installation or suitable bolts can be.

The main water tank ***2*** and secondary one ***3*,** the grow box modules ***12*** and the casing 4 are made of, preferably, with resistant and opaque plastic like the Acrylonitrile Butadiene Stirene.

In general, opaque material for manufacturing is preferred to stop light from reaching watered area or area with the nutrient solution, avoiding development of unwanted green mold or microalgae.

As stated previously, the grow box module 12 of vertical gardening of the invention, as well as the unit 1 of vertical gardening that incorporates more than one of said modules 12, and the hydroponic modular planting system shows in drawing 6, allow to combine hydroponics and aeroponics technologies. In practice, hydroponics technology would be used rather at the germination phase, when the plant roots system is not enough developed yet. In this phase, the irrigation water dripping through the water chamber of the grow box body ***32*** will water every now and then (hydroponics) the substratum in the mesh pot where is inserted seed or seedling. Once plant roots system start growing outside the substratum and the mesh pot and once roots start hanging, the aeroponics technology will prevail for the further plant development. The substratum used can be the usual in hydroponics: rock wool, tablets of coconut fibre, organic growing medium, etc.

The control of the irrigation system is carried out by means of a control device that comprises a plurality of sensors (not represented) to measure at least the ambient humidity and temperature and the light intensity, as well as the water level in the main water tank ***2*,** communication controller y microprocessor ***8*** are connected to the electronic box ***21*,** that collect, process and store the data from the mentioned sensors and exchange these data with at least an independent smart communication device (no represented, and can consist, optionally, in one or more smart communication device equipped with their corresponding Informatics Application). Such Informatics Application can control remotely at least the water pump ***5*** and at least an independent controller can control also a system of artificial light (no represented).

Although it's described in the said preferred embodiment of the invention, the person skilled in the art may introduce variations and modifications to preferred embodiment of the invention without getting out of the scope of the invention defined by the following claims. So, for example, the main water tank ***2*** could be equipped with more than one filling nozzle ***31*,** or be hung up to an independent vertical surface by different ways (such as suitable adhesive) than the described ones. Also it could have more than one water pump ***5.*** Or, in this case less advantageously, the plant could be inserted directly in the protruding pipe ***14*** of the grow box module ***12*** of vertical gardening instead of using a mesh pot. Also less advantageously, could present only one overflow, instead of the two overflows ***26, 27*** as presented in a preferred embodiment of the invention. Or, even if in this case is less advantageously, said overflows ***26, 27*** could have a different shape than the rectangular one or could not present inclination in their lower part ***28.*** In fact, although is less advantageously, the partitioning surface ***17*** could present drain holes different from the described ones (drain holes ***16,*** overflows ***26, 27,*** slit ***29***), in quantity or arrangement. And same for the dimensions and inclination levels of the elements that compose the grow box 12, it could change too from the describe ones. So, for this reason, it must be referred to the attached claims to define the scope of the present invention.

## Claims

1. Grow box Module (12) of vertical gardening that comprises a grow box body (32), a protruding pipe (14) inclined toward the front from the edge of the grow box module (12) and a drilled partitioning surface (17) with a plurality of drain holes (16) that creates a upper and lower water chamber in the grow box body (32), upper chamber being arranged at the bottom opening of the protruding pipe (14), so it keeps the irrigation water in the upper chamber but it allows at the same time to drain to the lower chamber, it's so **characterised because** the drilled partitioning surface (17) is inclined (β) with regard to the horizontal.

2. Grow box Module (12) of vertical gardening according to the claim 1, in which said drilled partitioning surface (17) is inclined in opposite direction to the inclination (a) of the protruding pipe (14).

3. Grow box Module (12) of vertical gardening according to any one of the anterior claims in which the plurality of drain holes (16) are distributed in a triangular shape, with the drain holes (16) that form the base of this triangle oriented to the protruding pipe (14).

4. Grow box Module (12) of vertical gardening according to any one of the anterior claims in which the plurality of drain holes (16) are shaped like cylindrical nozzles (15).

5. Grow box Module (12) of vertical gardening according to any one of the anterior claims, it's so **characterised** additionally because the drilled partitioning surface (17) presents a drainage slit (29), located at the junction with inner side wall of the grow box body (32), at the bottom opening level of the protruding pipe (14).

6. Grow box Module (12) of vertical gardening according to any one of the anterior claims, it's so **characterised** additionally by at least one overflow (26) (27) that allows the drainage of excess of water.

7. Grow box Module (12) of vertical gardening according to the claim 6, in which at least one overflow (26) (27) presents an inclination in its lower part (28). So in case of stacking several grow box modules (12), the excess water would drain substantially more on the top of the drilled partitioning surface (17) of the inferior grow box module (12) than on its corresponding overflow (26) (27).

8. Grow box Module (12) of vertical gardening according to the claim 6 or 7, it's so **characterised** additionally by two overflows (26) (27) facing each other, respectively arranged on this surface (17) at the left and right side of the protruding pipe (14).

9. Grow box Module (12) of vertical gardening according to any one of the anterior claims, it's so **characterised** additionally by a first edge rabbet (30) on the inner perimeter of its upper border and by a second edge rabbet (25) the outer perimeter of its down border, complementary to the first recess (30), both edge rabbets fitting one with another to allow upper grow box module (12) to fit with down module (12).

10. Grow box Module (12) of vertical gardening according to any one of the anterior claims, it's so **characterised** additionally by a coupling guide (19) in its rear surface, which allows its coupling with any other surface equipped by a rail coupling, including to the main deposit (2) of a hydroponic modular planting system.

11. Grow box Module (12) of vertical gardening, according to any one of the anterior claims, it's so **characterised** additionally because the protruding pipe (14) has several triangular fins (13) in its inner circular surface in such a way that the free inner section of the protruding pipe (14) reduces to the interior of the module (12).

12. Grow box Module (12) of vertical gardening, according to any one of the anterior claims, in which a grow box body (32), the protruding pipe (14) and, optionally, the drilled partitioning surface (17) form an only integral piece.

13. Grow box Module (12) of vertical gardening, according to any one of the anterior claims, in which said Grow box Module (12) is made of a resistant plastic material and opaque, in particular, of Acrylonitrile Butadiene Stirene.

14. Unit (1) of vertical gardening **characterised** because it comprises two or more Grow box Module (12) of vertical gardening according to any one of the anterior claims, so that said Grow box modules (12) can be stacked one module on top of other by means of its edge rabbets of its upper (30) and down border (25).

15. hydroponic modular planting system it's so **characterised** because it comprises:
(i) a main water tank (2), aimed to be fixed to an independent vertical support, that comprises at least a filling nozzle (31) and at least a drainage valve (22);
(ii) at least a grow box module (12) of vertical gardening according to any one of the claims 1 to 13, fixed to the main water tank (2);
(iii) a secondary water tank (3) under the main one (2), and that collect the draining water from the main water tank (2) through the said drainage valve (22) and at least through a module grow box module (12) of vertical gardening; and
(iv) an irrigation system that comprises at least a water pump (5) that pumps water from the secondary tank (3) and by means of at least a pipe (6) up to at least one water nozzle (7) to drip water in the upper opening of each grow box module (12) of vertical gardening.
